# EUROPEAN PATENT SPECIFICATION

(11) **EP 2 816 383 B1**
(45) Date of publication and mention of the grant of the patent: **25.09.2019**
(21) Application number: 12868565.8
(22) Date of filing: 26.10.2012
(51) Int. Cl.: G02B 6/44, G02B 6/02

(54) **OPTICAL FIBER COLORED CORE, OPTICAL FIBER TAPE CORE AND OPTICAL FIBER CABLE**
GEFÄRBTER GLASFASERKERN, GLASFASER-BANDKERN UND GLASFASERKABEL
ÂME COLORÉE DE FIBRE OPTIQUE, ÂME ENROULÉE DE FIBRE OPTIQUE ET CÂBLE À FIBRES OPTIQUES

(30) Priority: 15.02.2012 JP 2012030986
(43) Date of publication of application: 24.12.2014
(73) Proprietor: Furukawa Electric Co., Ltd., Chiyoda-ku Tokyo 100-8322 (JP)
(72) Inventor: TANAKA, Hiroki, Tokyo 100-8322 (JP); KASAHARA, Minoru, Tokyo 100-8322 (JP); MOCHIDUKI, Kouji, Tokyo 100-8322 (JP); SAITO, Minoru, Tokyo 100-8322 (JP); NAKAJIMA, Yasuo, Tokyo 100-8322 (JP)
(74) Representative: Strehl Schübel-Hopf & Partner
(86) International application number: PCT/JP2012/077694
(87) International publication number: WO 2013/121630

(56) References cited:
- EP-A1- 2 048 529
- EP-A1- 2 354 820
- WO-A1-2008/012926
- JP-A- S5 740 203
- JP-A- 2007 334 111
- JP-A- 2010 509 449
- US-A1- 2005 226 582

## Description

### Technical Field

The present invention relates to a colored optical fiber that is enclosed in an optical fiber cable. In particular, it relates to a double-layered colored optical fiber (optical fiber colored core), wherein the primary or secondary layer of the optical fiber is colored, so that a colored layer is abbreviated, an optical fiber ribbon (optical fiber tape core) that utilizes it, and an optical fiber cable.

### Background Art

Generally, a colored optical fiber comprises a triple-layered structure of a primary coating layer that shows buffering function, a secondary coating layer that serves as a protection layer, and a thin colored layer of about 2 to 10 µm for identification purposes. A colored optical fiber is used, for example, by applying a ribbon layer on the periphery of the colored layer to form an optical fiber ribbon, and packaged in a ribbon-slot-type cable. For an optical fiber ribbon, single core separability is required in order to obtain connectivity between the colored optical fibers. That is, it is required that it can easily be disassembled to expose the colored optical fiber, even after the ribbon layer is applied. For this reason, the colored layer greatly differs in physical property from the other two layers. First of all, its adhesion to the outer layer is low, and its detachability is high. Further, to suppress the decrease in permeability of ultraviolet ray (UV) due to pigments, the thickness is about 2 to 10µm and thin. Furthermore, since external force is applied during the single core separation process, the crosslinking density and equilibrium elastic modulus are high, so as to avoid destruction of the thin colored layer by the external force, and a rigid coating material is used. In general, a material with a Young's modulus of 500 to 3000 MPa and an equilibrium elastic modulus of 70 MPa or more is used for the colored layer.

When such a colored optical fiber is immersed in water, peeling tends to occur at the interface of the glass optical fiber and the primary coating layer.

The occurrence of such peeling can lead to uneven stress on the glass optical fiber, which increases transmission loss. Hence, in order to prevent peeling, various methods such as changing the material of each coating layer and securing sufficient adhesiveness between the glass optical fiber and the primary coating layer have been considered.

For example, in Patent Document 1, an optical fiber that shows superior hot-water resistance, which is obtained by setting the relaxation modulus of the secondary coating layer to 400 MPa or less to thereby prevent peeling at the interface of the glass optical fiber and the primary coating layer even when immersed in hot water, is disclosed. The two-part form of present claim 1 has been based on this document.

On the other hand, in recent years, for the purpose of cost reduction, colored optical fibers with a structure wherein the colored layer is abbreviated is being marketed. That is, a colored optical fiber, in which the primary coating layer or the secondary coating layer is colored, is in production, and since a separate colored layer is unnecessary, significant reduction in cost can be achieved. For example, in Patent Document 2, an optical fiber obtained by applying a primary coating and a secondary coating on an optical fiber, wherein the primary coating layer is colored, is disclosed.

### Prior Art Documents

### [Patent Documents]

[Patent Document 1] WO2008/012926 (equivalent to EP 2 048 529 A1)
[Patent Document 2] JP-A-S57-040203

### Summary of the Invention

### Problem to be Solved by the Present Invention

In recent years, with the development of FTTH (Fiber To The Home) the enhancement of anti-microbend property of the optical fiber, in order to decrease transmission loss, is desired. Increase in transmission loss of optical fiber is caused by various external stress, as well as microbend that occur from it. When the relaxation modulus is lowered, as in the optical fiber disclosed in Patent Document 1, superior hot-water resistance is achieved, but the secondary coating layer becomes flexible, and the anti-microbend property tends to deteriorate.

Hence, it was difficult to attain both anti-microbend property and hot-water resistance.

The present invention was made in view of the above-described problems, and the object of the present invention is to provide a colored optical fiber that shows good anti-microbend property, in which increase in transmission loss is less likely to occur, even when immersed in hot water, an optical fiber ribbon that utilizes it, and an optical fiber cable.

### Means for Solving the Problem

In order to attain the above-described object, the colored optical fiber of the present invention comprises two coating layers of a primary coating layer and a secondary coating layer, wherein either one of the primary coating layer or the secondary coating layer is colored; both coating layers have equilibrium elastic moduli of 60 MPa or less; the secondary coating layer has a relaxation modulus of 410 MPa or more; and the relaxation modulus is the elastic modulus calculated from the tensile stress on the secondary coating layer, which is obtained by heating the secondary coating layer to a temperature higher than the glass transition temperature of the secondary coating layer under no stress, gradually cooling at a rate of 1 °C/min while adding tensile stress at a rate of 0.02 %/min so that the tensile stress becomes 2 % when cooled to room temperature, and leaving for 300 minutes while holding the tensile tress at 2%.

Further, the optical fiber ribbon of the present invention is obtained by arranging a plurality of the above-described colored optical fibers of the present invention, so that they are parallel to each other, and providing a collective coating layer on the periphery.

Furthermore, the optical fiber cable of the present invention is characteristic in that it comprises the above-described optical fiber ribbon of the present invention.

### Effect of the Invention

By utilizing the colored optical fiber of the present invention, a colored optical fiber, in which transmission loss is less likely to increase even when immersed in hot water, which shows good anti-microbend property, can be attained, and an optical fiber ribbon that utilizes it, as well as an optical fiber cable, can be realized.

### Brief Description of the Drawings

FIG 1 is a cross-sectional diagram that shows one preferable embodiment of the colored optical fiber of the present invention.
FIG 2 is a cross-sectional diagram that shows one preferable embodiment of the optical fiber ribbon of the present invention.
FIG 3 is a cross-sectional diagram that shows one preferable embodiment of the optical fiber cable of the present invention.
FIG 4 is a cross-sectional diagram that shows one example of a conventional colored optical fiber.
FIG 5 is a graph that shows the temperature and strain profile of the sample during the measurement of relaxation modulus.
FIG 6 is a graph that shows the temperature and the tensile stress profile converted to elastic modulus.

### Best Mode for Carrying out the Invention

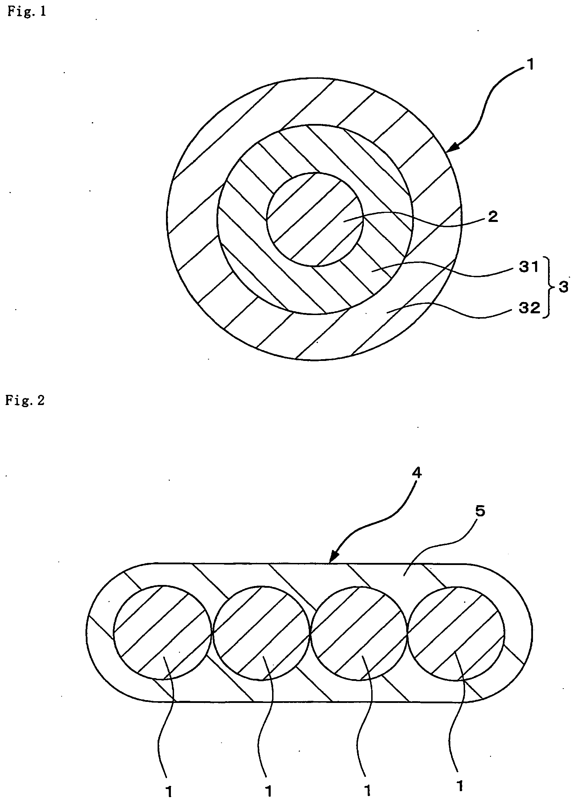

One preferable embodiment of the optical fiber of the present invention will be described with reference to FIG 1.

As shown in FIG 1, optical fiber 1 comprises a glass optical fiber 2 composed of quarts glass, and at least two coating layers 3 coated thereon. The outer diameter of the glass optical fiber 2 is normally 100 to 150 µm.

The two layers of the coating layer 3 consist of a primary coating layer 31 and a secondary coating layer 32, and although it is not limited, an UV-curable resin is mainly used. From the viewpoint of curing rate, one that contains a urethane-acrylate type or epoxy-acrylate type oligomer as its main component is suitable. The thickness of the primary coating layer 31 is usually 10 to 50 µm, and the thickness of the secondary coating layer 32 is usually 10 to 50 µm.

The UV-curable resin consists of oligomer, diluted monomer, additives, and the like. As additives, photoinitiators, oxidation inhibitors, chain-transfer agents, photostabilizers, plasticizers, coloring pigments, polymerization inhibitors, sensitizers, and lubricants may be listed.

Further, by selecting the type, structure, and molecular weight of the radical polymerizable oligomer, and the type of reactive monomer and polymerization initiator, as well as by adjusting the ratio of the radical polymerizable oligomer, the reactive monomer, and the polymerization initiator, appropriate values for various properties such as permeability, Young's modulus after curing, curing rate, and water absorption rate, can be obtained to suite its use as the primary coating layer or secondary coating layer of the optical fiber.

Further, the Young's modulus of the primary coating layer is preferably 0.1 to 1.5 MPa at normal temperature (23 °C), and more preferably, 0.2 to 1.0 MPa. Moreover, the Young's modulus of the secondary coating layer is preferably 500 to 2000 MPa at normal temperature (23 °C), and more preferably, 600 to 1500 MPa. When the Young's modulus of the primary coating layer is more than 1.5 MPa, the lateral pressure characteristic deteriorates, and when the Young's modulus of the secondary coating layer is more than 2000 MPa, the elongation property deteriorates. Further, when the Young's modulus of the secondary coating layer is less than 500 MPa, its rigidity becomes insufficient.

Furthermore, in the two layers of the coating layer 3, each layer has an equilibrium elastic modulus of 60 MPa or less.

Further, the secondary coating layer 32 has a relaxation modulus of 410 MPa or more and either one of the primary coating layer 31 or the secondary coating layer 32 is colored. The color may, for example, be red, blue, or yellow, and the whole or part of the coating layer is colored.

By adopting a double-layered structure and setting the relaxation modulus of the secondary coating layer 32 to 410 MPa or more, the anti-microbend property and hot-water resistance can both be attained.

Note that the relaxation modulus is the elastic modulus calculated from the tensile stress at relaxation, which is obtained by heating the secondary coating layer to a temperature higher than the glass transition temperature (Tg) while adding no stress, then gradually cooling to room temperature while adding tensile strain at a constant rate, and when room temperature is reached, maintaining the temperature and adding constant tensile strain until the stress on the secondary coating layer is relaxed.

The relaxation modulus of the secondary coating layer can easily be adjusted by changing the molecular weight of the radical polymerizable oligomer in the resin of the secondary coating layer, or by changing the ratio of the sealed unsaturated group at both ends of the radical polymerizable oligomer. The relaxation modulus of the secondary coating layer can be lowered by increasing the molecular weight of the radical polymerizable oligomer in the resin of the secondary coating layer, or by increasing the ratio of the sealed unsaturated group at both ends of the radical polymerizable oligomer.

Furthermore, in the optical fiber of the present invention, the microbend loss is 0.1 dB/km or less. For example, the more rigid the secondary coating layer is, in other words, the higher the relaxation modulus of the secondary coating layer is, the larger the protective effect becomes, leading to better anti-microbend property.

Further, the double-layered optical fiber shows better hot-water resistance than a triple-layered optical fiber, which includes a colored layer in the outer-most layer.

When the optical fiber is immersed in hot water of 60 °C, the residual stress between the glass interface and the primary coating layer increases, and inter-layer peeling (delamination) between the glass interface and the primary coating layer may occur. When the optical fiber is of a double-layered structure, the number of generation and degree of delamination remains in a relatively low level, and the increase in transmission loss remains relatively low level, too. However, in a triple-layered structure, the number and degree of delamination can remarkably increase. Further, transmission loss can increase remarkably, along with it.

The reason that delamination increases remarkably in a triple-layered optical fiber is thought to be that the third colored layer, which has a large equilibrium elastic modulus, acts as a semipermeable membrane, causing the generation of osmotic pressure. That is, when water accumulates at the delamination part, the soluble components in the coating layer dissolves into this water, creating a solution. The difference in concentration between this solution in the delamination part and the water outside the colored layer leads to the generation of osmotic pressure, causing water to further move, leading to the growth in delamination.

On the other hand, in a double-layered optical fiber, it is thought that since a colored layer that acts as a semipermeable membrane does not exist, water does not move further into the delamination part, and the delamination does not grow larger.

Next, a preferable embodiment of the optical fiber ribbon will be described with reference to FIG 2.

As shown in FIG 2, the optical fiber ribbon 4 is composed of four of the aforementioned optical fiber 1 aligned parallel to each other in a planar form, which is then collectively coated with a ribbon resin 5 consisting of a UV-curable resin. Note that the number of optical fibers 1 is not limited to four, and various numbers such as two, eight, twelve, etc., may be applied.

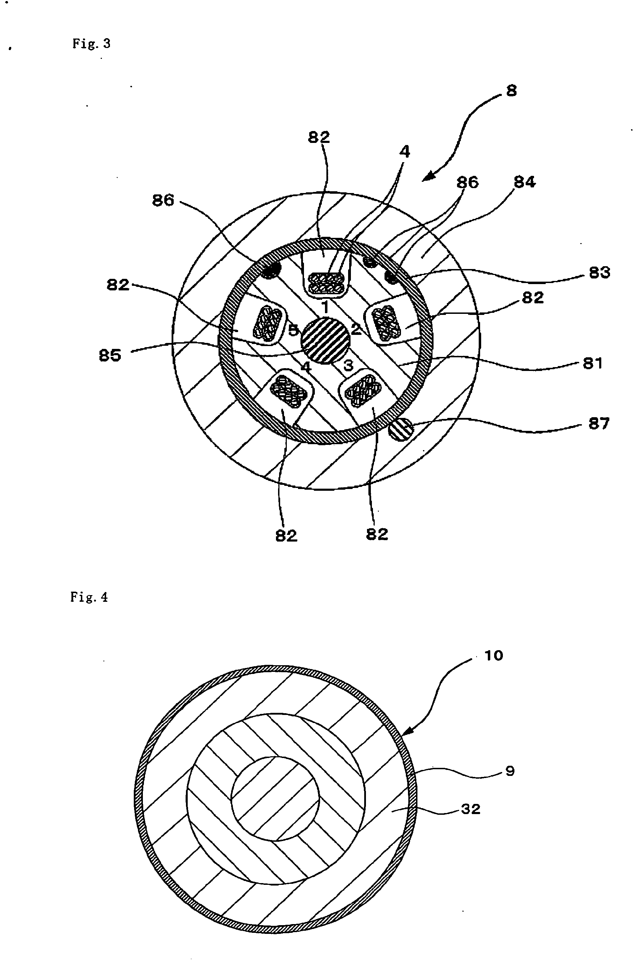

Next, a preferable embodiment of the optical cable of the present invention will be described with reference to FIG 3.

As shown in FIG 3, the optical fiber cable 8 is, for example, a 40-fiber SZ-slotted core cable, wherein two of the aforementioned optical fiber ribbons 4 are enclosed in each SZ slot 82 of the five-grooved spacer 81, which is then covered with a suppression winding tape 83 and coated with a sheath 84. Further, a tension member 85 is provided at the cross-sectional center of the spacer 81. A tracer mark 86 is provided on the outer periphery of the spacer 81, and a tear string 87 is provided on part of the outer periphery of the suppression winding tape 83.

The above-described SZ slot 82 is not limited to a five-grooved type, and the number of grooves may arbitrarily be selected. Further, the number of optical fiber ribbons 4 in the SZ slot 82 is not limited to two, and may be selected arbitrarily. Furthermore, an S slot may be used in place of an SZ slot.

### Example

Hereinafter, Examples of the present invention will be described for the colored optical fiber 1 of the aforementioned embodiment. However, the present invention is not limited to the following Examples.

For the production of a sample colored optical fiber, as the glass optical fiber 2, a quartz glass optical fiber with an outer diameter (diameter) of ∅ = 125 µm was used, and a primary coating layer 31 was formed on its outer periphery, after which a colored secondary coating layer 32 was formed on the outer periphery thereof, to obtain a double-layered colored optical fiber 1 shown in FIG 1 (Examples 1 to 4, Comparative Example 1). The outer diameter of the primary coating layer 31 was 185 µm and the outer diameter of the secondary coating layer 32 was 245 µm.

Further, an optical fiber was prepared by the same method except for using a non-colored secondary coating layer, and a colored layer 9 was formed on its outer periphery, to obtain the triple-layered colored optical fiber 10 shown in FIG 4, with an outer diameter of 255 µm (Comparative Examples 2 to 5).

In the above-described composition of the colored optical fiber 1 and the colored optical fiber 10, by changing the material composition of the secondary coating layer 32, those with different relaxation moduli were prepared, and the Young's modulus, anti-microbend property, and increase in transmission loss after testing in hot-water at 60 °C for 30 days were measured.

The results are shown in Table 1.

**[Table1]**

| Sample | Structure | Young's Modulus of PriJmry Coating Layer | Young's Modulus of Secondary Coating Layer | Relaxation Modulus | Anti-microbend Property | Warm- water Resistance | Equilibrium Elastic Modulus of Secondary Coating Layer | Equilibrium Elastic Modulus of Colored Layer |
|---|---|---|---|---|---|---|---|---|
| | | (MPa) | (MPa) | (MPa) | | | (MPa) | (MPa) |
| Example 1 | double- layered | 0.4 | 930 | 410 | good | good | 40 | - |
| Example 2 | double-layered | 0.4 | 930 | 430 | good | good | 43 | - |
| Example 3 | double-layered | 0.4 | 1050 | 530 | good | good | 54 | - |
| Example 4 | double-layered | 0.4 | 1050 | 570 | good | good | 54 | - |
| Comparative Example 1 | double-layered | 0.4 | 750 | 230 | bad | good | 19 | - |
| Comparative Example 2 | triple-layered | 0.4 | 800 | 260 | bad | good | 19 | 80 |
| Comparative Example 3 | triple-layered | 0.4 | 930 | 430 | good | bad | 43 | 80 |
| Comparative Example 4 | triple-layered | 0.4 | 1050 | 590 | good | bad | 54 | 80 |
| Comparative Example 5 | triple-layered | 0.4 | 1050 | 550 | good | bad | 54 | 80 |

Next, methods of measurement for the Young's modulus, relaxation modulus, anti-microbend property, and hot-water test at 60 °C for 30days will be described, along with the standards for judgment.

### [Method of Measuring Young's Modulus]

The Young's modulus for the primary coating layer of the optical fiber was calculated using the method described in JP-A-2007-333795. Further, the Young's modulus for the secondary coating layer of the optical fiber was measured by the following method.

After immersing the optical fiber in liquid nitrogen, by drawing the glass optical fiber, a tubular measurement sample of the integrated primary coating layer/secondary coating layer (for Examples 1 to 5, Comparative Example 1) and primary coating layer/secondary coating layer/colored layer (for Comparative Examples 2 to 5), with a length of 50 mm, was obtained. This tubular sample was subjected to a tensile test under the condition of 23 °C, tensile rate of 1 mm/min, and gauge length of 25 mm, and the Young's modulus was calculated from the tensile strength at 2.5 % strain and the cross-sectional area of the sample.

### [Method of Measuring Relaxation Modulus for the Secondary Coating Layer]

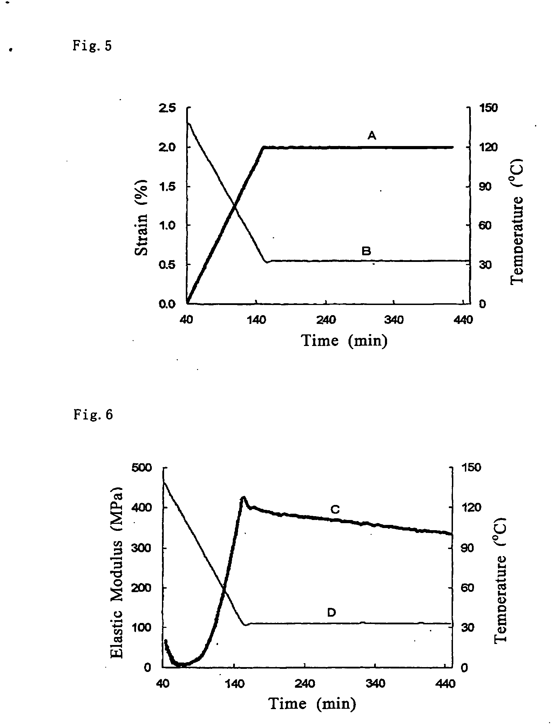

After immersing the optical fiber in liquid nitrogen, by drawing the glass optical fiber, a tubular measurement sample of the integrated primary coating layer/secondary coating layer (for Examples 1 to 5, Comparative Example 1) and primary coating layer/secondary coating layer/colored layer (for Comparative Examples 2 to 5), with a length of 30 mm, was obtained. This sample was heated up to 140 °C under no stress, gradually cooled down to room temperature at a rate of 1 °C/min while adding a constant tensile strain at a rate of 0.02 %/min (sample gauge length 20 mm), so that a 2 % tensile strain was applied when room temperature was reached. Then, with the temperature maintained at room temperature, and the tensile strain maintained at 2 %, the sample was left for 300 minutes. The tensile stress was calculated from the tensile load applied on the sample at that point and the cross-sectional area of the secondary coating layer (for Examples 1 to 4, Comparative Example 1), or the sum of the cross-sectional areas of the secondary coating layer and the colored layer (for Comparative Examples 2 to 5). Note that the temperature and strain profile of the sample during measurement is shown in FIG 5. Also, a typical example of the elastic modulus calculated from the measured tensile stress profile and the amount of strain is shown in FIG 6. In FIG 5 and FIG 6, the bold lines A and C each show strain and elastic modulus, and thin lines B and D each show temperature.

Note that for the measurement, a viscoelasticity measuring instrument (Dynamic Mechanical Analyzer) SEIKO Instruments DMS6100 was used.

Here, although the measurement samples are those consisting of the primary coating layer/secondary coating layer, or primary coating layer/secondary coating layer/colored layer, because the elastic modulus of the primary coating layer is much smaller than those of the secondary coating layer and the colored layer and can be ignored, for the calculation of the relaxation modulus, the cross-sectional area of the secondary coating layer or the sum of the cross-sectional area of the secondary coating layer and the colored layer was used.

### [Method of Measuring Equilibrium Elastic Modulus for the Secondary Coating Layer]

After immersing the optical fiber in liquid nitrogen, by drawing the glass optical fiber, a tubular measurement sample with a length of 30mm, similar to that for the measurement of relaxation modulus, was obtained. Using a dynamic viscoelasticity measuring instrument (RSA3, manufactured by TA Instruments), measurement was performed at a frequency of 1Hz and a temperature variance in the range of -100 to 200 °C, and the elastic modulus at 150 °C was obtained as the equilibrium elastic modulus.

Since the elastic modulus of the primary coating layer is much smaller than the elastic modulus of the secondary coating layer and can be ignored, the cross-sectional area of the secondary coating layer was used to calculate the equilibrium elastic modulus.

Further, the equilibrium elastic modulus for the colored layer of the triple-layered optical fiber of Comparative Examples 2 to 5 was calculated by the following method. First, the equilibrium elastic modulus of the secondary coating layer was measured from a measurement sample of the integrated primary coating layer/secondary coating layer, prior to coating the colored layer. Next, after coating the colored layer, the equilibrium elastic modulus was measured from a measurement sample of the integrated primary coating layer/secondary coating layer/colored layer. In particular, the contributory portion of the secondary coating layer (the equilibrium elastic modulus of the secondary coating layer at 150 °C x the cross-sectional area of the secondary coating layer) was subtracted from the tensile load of the measurement sample, which is the integrated primary coating layer/secondary coating layer/colored layer, at 150 °C, and the value obtained was set to be "the tensile load by the colored layer". Next, the equilibrium elastic modulus was calculated from this "tensile load by the colored layer" and the cross-sectional area of the colored layer.

### [Method of Evaluating Anti-microbend Property]

As a method of evaluating anti-microbend property, IEC TR62221 (fixed drum method) was adopted. First, a mesh of #150 was wrapped around a drum of ∅ = 400 mm, and one layer of 850 m of the colored optical fiber was wrapped thereon at a tension of 1N, and transmission loss after leaving for 24 hours was measured. The value obtained by subtracting the transmission loss at bundled state (a state at which it is not wrapped on a drum) from the measured transmission loss, was considered the microbend loss.

In Table 1, since when the microbend loss is 0.1 dB/km or less, transmission loss is not likely to increase even with the addition of external force or temperature change after formation of the cable, those with a transmission loss of 0.1 dB/km or less were considered acceptable, and were indicated with "good", and those with a transmission loss of more than 0.1 dB/km were considered unacceptable, and were indicated with "bad".

### [Method of Evaluating hot-water Resistance]

A colored optical fiber with a length of 2 km was immersed in water heated to 60 °C for 30 days, and the degree of increase in transmission loss at a wavelength of 1.55 µm was measured by OTDR. Those for which the increase in transmission loss was 0.05 dB/km or less was considered acceptable, and were indicated with "good" in Table 1, while those for which the increase in transmission loss was more than 0.05 dB/km were considered unacceptable and were indicated with "bad" in Table 1.

Note that here, the reason that the temperature of the hot water was set at 60 °C as the index for evaluating hot-water resistance was because delamination and increase in transmission loss resulting from it tend to accelerate as the temperature of water increases. There is a tendency in that they are accelerated with higher temperature. Thus, the higher the temperature, the more severe the condition becomes. However, the glass transition temperature of the second coating layer is generally about 70 to 100 °C, and the physical property of the second coating layer drastically changes with this temperature as the boundary. Hence, 60 °C was chosen as a temperature at which the physical property of the second coating layer does not change, while being as severe a condition as possible.

As shown in Table 1, for both the double-layered colored optical fiber and the triple-layered colored optical fiber, when the relaxation modulus was 410 MPa or more, the microbend loss was small and good results were obtained.

Further, for all of the double-layered colored optical fibers, the increase in transmission loss after immersing in water heated to 60 °C for 30 days was 0.05 dB/km or less, and good hot-water resistance were shown. Furthermore, even for the triple-layered colored optical fiber, in Comparative Example 2, wherein the relaxation modulus was as low as 260 MPa, good hot-water resistance was seen.

As described above, in the colored optical fibers of Examples 1 to 4, wherein the relaxation modulus was 410 MPa or more, the microbend loss were small, at 0.1 dB/km or less, and it was discovered that superior anti-microbend property was obtained. Further, as a result of the hot-water test of 60 °C 30 days, all showed maximum increase in transmission loss of 0.05 dB/km or less during the 30 days, and it was discovered that superior hot-water resistance was obtained.

In contrast, in Comparative Example 1, the relaxation modulus was less than 410 MPa, and the microbend loss was large. Further, in the triple-layered colored optical fiber of Comparative Example 2, as with Comparative Example 1, the relaxation modulus was smaller than 410 MPa, and the microbend loss was large. Moreover, in Comparative Example 3 to 5, although the relaxation moduli were 410 MPa or more, and thus, good anti-microbend properties were obtained, in the hot-water test of 60 °C 30 days, the maximum increase in transmission loss was larger than 0.05 dB/km.

That is, in a triple-layered colored optical fiber, which contains a layer that shows equilibrium elastic modulus that is larger than 60 MPa, obtaining both anti-microbend property and hot-water resistance was difficult. However, in a double-layered colored optical fiber, wherein the equilibrium elastic moduli of all layers were 60 MPa or less, both were compatible.

In a triple-layered colored optical fiber, it is thought that the transmission loss became large, because the equilibrium elastic modulus was higher than 60 MPa, at 80 MPa, and remarkable increase in delamination occurred due to dense cross-linking, which caused osmotic pressure, and led to increase in loss. On the other hand, since the equilibrium elastic modulus of the secondary coating layer of the double-layered optical fiber was below 60 MPa, at 54 MPa, the cross-linking structure was coarse, and osmotic pressure did not occur. Hence, it is believed that water did not move to the delamination part, and increase in transmission loss became small.

As described above, in a double-layered colored optical fiber, by setting the relaxation modulus of the secondary coating layer at 410 MPa or more, a colored optical fiber that shows both good anti-microbend property and hot-water resistance can be obtained.

Note that from the viewpoint of elongation, the relaxation modulus should be 700 MPa or less. That is, when the secondary coating layer is excessively rigid, deterioration in flexibility, such as the occurrence of cracks, may be seen with the addition of bending strain on the optical fiber.

### Description of Notations

- 1: colored optical fiber
- 2: glass optical fiber
- 3: double-layered coating layer
- 4: optical fiber ribbon
- 5: ribbon resin
- 8: optical fiber cable
- 9: colored layer
- 10: triple-layered optical fiber
- 31: primary coating layer
- 32: secondary coating later

## Claims

1. A colored optical fiber (1), which comprises a primary coating layer (31) and a secondary coating layer (32), wherein either one of the primary coating layer (31) or the secondary coating layer (32) is colored;
**characterized in that**
both coating layers (31, 32) have equilibrium elastic moduli of 60 MPa or less; and
the secondary coating layer (32) has a relaxation modulus of 410 MPa or more, wherein the relaxation modulus is the elastic modulus calculated from the tensile stress on the secondary coating layer (32), which is obtained by heating the secondary coating layer (32) to a temperature higher than the glass transition temperature of the secondary coating layer (32) under no stress, gradually cooling at a rate of 1°C/min while adding tensile strain at a rate of 0.02%/min so that the tensile strain becomes 2% when cooled to room temperature, and leaving for 300 minutes while holding the tensile strain at 2%.

2. An optical fiber ribbon (4) obtained by arranging a plurality of the colored optical fiber (1) of claim 1 so that they are parallel to each other, and providing a collective coating layer (5) on the outer periphery thereof.

3. An optical fiber cable (8) comprising the optical fiber ribbon (4) according to claim 2.

## Patentansprüche

1. Gefärbte optische Faser (1) mit einer ersten Überzugsschicht (31) und einer zweiten Überzugsschicht (32), wobei entweder die erste Überzugsschicht (31) oder die zweite Überzugsschicht (32) gefärbt ist,
**dadurch gekennzeichnet, dass**
beide Überzugsschichten (31, 32) Gleichgewichtselastizitätsmodule von höchstens 60 MPa haben, und
die zweite Überzugsschicht (32) ein Entspannungsmodul von mindestens 410 MPa hat, wobei das Entspannungsmodul das aus der Zugspannung der zweiten Überzugsschicht (32) berechnete Elastizitätsmodul ist, das durch Erwärmen der zweiten Überzugsschicht (32) auf eine Temperatur oberhalb der Glasübergangstemperatur der zweiten Überzugsschicht (32) ohne Spannung, graduelles Kühlen mit einer Rate von 1 °C/min bei Zugabe von Zugsbelastung mit einer Rate von 0,02 %/min, so dass die Zugspannung bei Kühlung auf Raumtemperatur 2% wird, und Beibehaltung für 300 Minuten während die Zugspannung bei 2% gehalten wird, erhalten ist.

2. Optisches Faserband (4), das dadurch erhalten ist, dass mehrerer gefärbter optischer Fasern (1) nach Anspruch 1 so angeordnet werden, dass diese parallel zueinander sind, und eine gemeinsame Überzugsschicht (5) an deren Außenumfang vorgesehen wird.

3. Optisches Faserkabel (8) mit dem optischen Faserband (4) nach Anspruch 2.

## Revendications

1. Fibre optique colorée (1), qui comprend une couche de revêtement principale (31) et une couche de revêtement secondaire (32), dans laquelle l'une ou l'autre de la couche de revêtement principale (31) ou de la couche de revêtement secondaire (32) est colorée ;
**caractérisée en ce que**
les deux couches de revêtement (31, 32) ont des modules d'élasticité à l'équilibre de 60 MPa ou moins ; et
la couche de revêtement secondaire (32) a un module de relaxation de 410 MPa ou plus, dans laquelle le module de relaxation est le module d'élasticité calculé à partir de la contrainte de traction sur la couche de revêtement secondaire (32), qui est obtenue en chauffant la couche de revêtement secondaire (32) à une température supérieure à la température de transition vitreuse de la couche de revêtement secondaire (32) sous aucune contrainte, en refroidissant graduellement à une vitesse de 1°C/min tout en ajoutant une contrainte de traction à une vitesse de 0,02%/min de telle manière que la contrainte de traction devient 2% lors d'un refroidissement à la température ambiante, et en laissant pendant 300 minutes tout en maintenant la contrainte de traction à 2%.

2. Ruban de fibres optiques (4) obtenu en agençant une pluralité de la fibre optique colorée (1) selon la revendication 1 de manière à ce qu'elles soient parallèles les unes aux autres, et en apportant une couche de revêtement collective (5) sur la périphérie extérieure de celles-ci.

3. Câble de fibres optiques (8) comprenant le ruban de fibres optiques (4) selon la revendication 2.
